(19) Europäisches Patentamt / European Patent Office / Office européen des brevets

(11) **EP 3 732 457 B1**

(12) **FASCICULE DE BREVET EUROPEEN**

(45) Date de publication et mention
de la délivrance du brevet:
**29.09.2021 Bulletin 2021/39**

(21) Numéro de dépôt: **18842779.3**

(22) Date de dépôt: **19.12.2018**

(51) Int Cl.:
**G01M 13/04** *(2019.01)*    **G01M 15/12** *(2006.01)*
**G01M 15/14** *(2006.01)*    **G01M 13/045** *(2019.01)*

(86) Numéro de dépôt international:
**PCT/FR2018/053421**

(87) Numéro de publication internationale:
**WO 2019/129956 (04.07.2019 Gazette 2019/27)**

(54) **PROCÉDÉ ET DISPOSITIF DE SURVEILLANCE D'UN ROULEMENT ÉQUIPANT UN DISPOSITIF TOURNANT**

VERFAHREN UND VORRICHTUNG ZUR ÜBERWACHUNG EINES LAGERS EINER DREHVORRICHTUNG

METHOD AND DEVICE FOR MONITORING A BEARING EQUIPPING A ROTARY DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2017 FR 1763312**

(43) Date de publication de la demande:
**04.11.2020 Bulletin 2020/45**

(73) Titulaire: **SAFRAN**
**75015 Paris (FR)**

(72) Inventeurs:
- **ABBOUD, Dany**
**77550 Moissy-Cramayel (FR)**
- **EL BADAOUI, Mohamed**
**77550 Moissy-Cramayel (FR)**

(74) Mandataire: **Cabinet Beau de Loménie**
**158, rue de l'Université**
**75340 Paris Cedex 07 (FR)**

(56) Documents cités:
- **P. BORGHESANI ET AL: "Application of cepstrum pre-whitening for the diagnosis of bearing faults under variable speed conditions", MECHANICAL SYSTEMS AND SIGNAL PROCESSING, vol. 36, no. 2, 1 avril 2013 (2013-04-01), pages 370-384, XP055461483, AMSTERDAM, NL ISSN: 0888-3270, DOI: 10.1016/j.ymssp.2012.11.001**
- **ANTONI ET AL: "Cyclic spectral analysis of rolling-element bearing signals: Facts and fictions", JOURNAL OF SOUND AND VIBRATION, ELSEVIER, AMSTERDAM, NL, vol. 304, no. 3-5, 22 mai 2007 (2007-05-22), pages 497-529, XP022083965, ISSN: 0022-460X, DOI: 10.1016/J.JSV.2007.02.029**
- **F. TAFININE: "On-line vibration monitoring of bearing faults in induction machine usin Cyclic Spectral Analysis", MATEC WEB OF CONFERENCES, vol. 83, 1 janvier 2016 (2016-01-01), page 09010, XP055506354, DOI: 10.1051/matecconf/20168309010**

**Description**

Arrière-plan de l'invention

L'invention se rapporte au domaine général des machines ou des dispositifs tournants, et concerne plus particulièrement les roulements équipant de telles machines ou dispositifs, comme par exemple les roulements à billes ou à rouleaux.

Elle a une application privilégiée mais non limitative dans le domaine de l'aéronautique dans lequel de nombreuses machines tournantes sont utilisées.

Les roulements, et en particulier les roulements à billes ou à rouleaux, sont des dispositifs mécaniques tournants largement utilisés dans les machines tournantes et dont le rôle est d'entraîner en rotation des arbres de transmission. Un tel roulement est généralement composé de deux bagues coaxiales (une bague intérieure et une bague extérieure) entre lesquelles sont placées des éléments roulants (des billes ou des rouleaux), maintenus dans une cage. Le mouvement rotatif de l'arbre est assuré par le mouvement des éléments roulants.

En raison de leur rôle élémentaire dans les chaînes de transmission mécanique, les roulements sont sollicités en permanence et donc fragilisés. Ils peuvent subir des dégradations de l'état de surface ou de la forme des bagues intérieure ou extérieure, ainsi que des éléments roulants. L'endommagement d'un roulement peut entraîner un arrêt intempestif de la machine dans lequel il est utilisé.

Afin d'éviter une telle situation, il est connu de surveiller l'état des roulements équipant une machine tournante pour pouvoir détecter de façon précoce la présence de défauts sur ces roulements. Une des techniques les plus utilisées pour procéder à cette surveillance s'appuie sur une analyse vibratoire de signaux acquis au moyen de capteurs tels que des accéléromètres placés à proximité des roulements.

Le principe sur lequel repose l'analyse vibratoire est le suivant : lorsqu'un élément roulant (bille ou rouleau) du roulement entre en contact avec une surface défectueuse du roulement (en raison par exemple d'un écaillage ou d'une fissure à la surface d'une des bagues du roulement), il se produit des chocs périodiques qui produisent une vibration selon une fréquence spécifique, caractéristique du défaut affectant le roulement, et qui viennent changer la structure statistique du signal vibratoire acquis par l'accéléromètre. Une valeur théorique de la fréquence spécifique du défaut peut être obtenue aisément à partir des caractéristiques géométriques du roulement et de sa cinématique. La détection du défaut affectant le roulement se fait alors en identifiant dans le signal vibratoire acquis par l'accéléromètre, une composante à la fréquence spécifique de ce défaut, par exemple en réalisant une analyse spectrale ou une analyse de l'enveloppe du signal vibratoire.

Toutefois, les systèmes de surveillance actuels mettant en œuvre une analyse vibratoire se heurtent à plusieurs difficultés pratiques.

En effet, il existe aujourd'hui un besoin de surveiller des équipements de plus en plus complexes, notamment dans le domaine de l'aéronautique, qui peuvent comprendre plusieurs éléments tournants en plus des roulements (ex. des compresseurs, des engrenages, des soufflantes, etc.). Cette surveillance, pour des raisons évidentes d'encombrement, doit en outre être réalisée avec un nombre restreint d'accéléromètres. Il en résulte que la composante représentative du défaut affectant le roulement peut être masquée par des bruits provenant d'autres sources de vibrations parasites (i.e. d'autres éléments tournants de l'équipement considéré), de sorte que les méthodes utilisées dans les systèmes de surveillance actuels (par exemple l'analyse d'enveloppe) ne sont pas toujours en mesure de détecter ce défaut. Ceci peut entraîner une détection tardive du défaut voire une incapacité à détecter le défaut.

Pour pallier cet inconvénient, il est possible d'avoir recours à des techniques de séparation de sources. Toutefois, ces techniques ont un coût de calcul élevé, et sont souvent impossibles à mettre en œuvre en temps réel.

En outre, une difficulté particulière qui apparaît lorsqu'on surveille des roulements par analyse vibratoire est que les fréquences réelles des défauts qui affectent ces roulements peuvent différer des valeurs théoriques calculées pour les besoins de l'analyse vibratoire à partir des caractéristiques géométriques du roulement et de sa cinématique. Ceci est dû au glissement des roulements d'une part, et d'autre part, au fait qu'un endommagement du roulement s'accompagne généralement d'un phénomène de frottement qui a tendance à ralentir la rotation du roulement endommagé et à modifier sa cinématique.

Le document EP 2 693 176 décrit un procédé de détection de défauts d'un roulement par analyse vibratoire tentant de résoudre les problèmes précités. Ce procédé s'appuie sur un prétraitement au moyen d'un filtre autorégressif d'un signal vibratoire acquis au moyen d'un accéléromètre placé sur le boîtier du système comprenant les roulements à surveiller, suivi d'une analyse de l'enveloppe du signal vibratoire résultant du prétraitement. Toutefois ce procédé de détection présente une complexité en termes d'implémentation relativement élevée, en raison notamment du prétraitement effectué. En outre, l'efficacité du prétraitement réalisé dépend en grande partie de la détermination de plusieurs paramètres (ex. ordre du filtre autorégressif, etc.) qui peut s'avérer compliquée en pratique. Un autre exemple de procédé est décrit par P. BORGHESANI ET AL: "Application of cepstrum pre-whitening for the diagnosis of bearing faults under variable speed conditions",MECHANICAL SYSTEMS AND SIGNAL PROCESSING, vol. 36, no. 2, 1 avril 2013, pages 370-384.

Objet et résumé de l'invention

La présente invention a pour but notamment de remédier aux insuffisances précitées de l'état de la technique en proposant un procédé de surveillance d'un roulement équipant un dispositif tournant, comprenant :

- une étape d'obtention d'un signal vibratoire acquis par un capteur accélérométrique, ledit signal vibratoire contenant une signature vibratoire du roulement ;
- une étape de traitement du signal vibratoire comprenant l'élimination d'une composante déterministe du signal vibratoire ;
- une étape d'obtention, pour un défaut déterminé susceptible d'affecter le roulement, d'une fréquence théorique caractéristique de ce défaut et d'une déviation maximale déterminée autour de cette fréquence théorique ;
- une étape de calcul, en fonction d'une fréquence cyclique, d'une cohérence cyclique dite intégrée du signal vibratoire traité moyennée sur une bande de fréquences spectrales prédéterminée ;
- une étape d'estimation d'une fréquence réelle du défaut à partir de la cohérence cyclique intégrée, de la fréquence théorique caractéristique du défaut et de la déviation maximale déterminée autour de cette fréquence théorique ;
- une étape de calcul d'un indicateur de diagnostic du défaut en sommant un nombre entier M de cohérences cycliques intégrées du signal vibratoire évaluées en M fréquences cycliques égales respectivement à M harmoniques de la fréquence réelle estimée du défaut ;
- une étape de comparaison de l'indicateur de diagnostic du défaut avec un seuil prédéterminé pour ce défaut ; et
- en cas de dépassement du seuil par l'indicateur de diagnostic, une étape de détection du défaut sur le roulement.

Corrélativement, l'invention vise aussi un dispositif de surveillance d'un roulement équipant un dispositif tournant, ce dispositif de surveillance comprenant :

- un premier module d'obtention, configuré pour obtenir un signal vibratoire acquis par un capteur accélérométrique, ledit signal vibratoire contenant une signature vibratoire du roulement ;
- un module de traitement du signal vibratoire, configuré pour éliminer une composante déterministe du signal vibratoire ;
- un deuxième module d'obtention, configuré pour obtenir pour un défaut déterminé susceptible d'affecter le roulement, une fréquence théorique caractéristique de ce défaut et une déviation maximale déterminée autour de cette fréquence théorique ;
- un premier module de calcul, configuré pour calculer, en fonction d'une fréquence cyclique, une cohérence cyclique dite intégrée du signal vibratoire traité moyennée sur une bande de fréquences spectrales prédéterminée ;
- un module d'estimation, configuré pour estimer une fréquence réelle du défaut à partir de la cohérence cyclique intégrée, de la fréquence théorique caractéristique du défaut et de la déviation maximale déterminée autour de cette fréquence théorique ;
- un deuxième module de calcul d'un indicateur de diagnostic du défaut, configuré pour calculer ledit indicateur en sommant un nombre entier M de cohérences cycliques intégrées du signal vibratoire évaluées en M fréquences cycliques égales respectivement à M harmoniques de la fréquence réelle estimée du défaut ;
- un module de comparaison, configuré pour comparer l'indicateur de diagnostic du défaut avec un seuil prédéterminé pour ce défaut et pour détecter le défaut sur le roulement en cas de dépassement du seuil par l'indicateur de diagnostic.

L'invention peut s'appliquer à divers types de roulement, et notamment à un roulement à billes ou à un roulement à rouleaux.

L'invention propose donc une technique de surveillance d'un roulement équipant un dispositif tournant basée sur une analyse cyclostationnaire du signal vibratoire acquis par un capteur accélérométrique. Le capteur accélérométrique est placé de telle façon que le signal vibratoire qu'il acquiert contient une signature vibratoire du roulement. Il convient de noter qu'à cet effet, le capteur accélérométrique peut être placé à proximité du roulement ou sur le boîtier du système qui comprend le roulement que l'on cherche à surveiller, mais il peut également être placé en un point éloigné du roulement dès lors qu'un rapport signal-sur-bruit suffisant est assuré (typiquement de l'ordre de 5%).

L'analyse cyclostationnaire proposée par l'invention permet d'extraire du signal vibratoire un indicateur de diagnostic d'un défaut susceptible d'affecter le roulement (ex. défaut affectant une bague interne du roulement, défaut affectant une bague externe du roulement, etc.) qui, lorsqu'il est comparé à un seuil déterminé pour ce défaut, permet de détecter si le roulement est affecté ou non dudit défaut. Cet indicateur de diagnostic est avantageusement calculé après avoir appliqué un (pré-)traitement au signal vibratoire consistant à le débarrasser de sa composante déterministe ;

cette composante déterministe est typiquement générée par d'autres éléments tournants que le roulement surveillé (qui contribue quant à lui à la composante aléatoire du signal vibratoire), et susceptibles de parasiter le signal vibratoire acquis par le capteur.

On note que l'indicateur dérivé conformément à l'invention est déterminé pour un défaut donné susceptible d'affecter le roulement puisqu'il dépend d'une fréquence réelle du défaut estimée à partir de la fréquence théorique caractéristique du défaut et d'une déviation maximale déterminée autour de cette fréquence théorique, chaque défaut se traduisant par une fréquence théorique différente et par une déviation maximale possible de la fréquence réelle du défaut par rapport à cette fréquence théorique. Ainsi, en dérivant plusieurs indicateurs relatifs à une pluralité de défauts susceptibles d'affecter le roulement (ex. un indicateur associé à un défaut sur la bague interne du roulement, un indicateur associé à un défaut sur la bague externe du roulement, un indicateur associé à un défaut sur la cage du roulement, un indicateur associé à un défaut sur un élément roulant du roulement, etc.), il est possible d'identifier aisément le ou les éléments du roulement qui présentent un défaut. Ceci permet d'opérer une maintenance ciblée sur le roulement.

De façon avantageuse, la cohérence cyclique du signal vibratoire traité permet de faire ressortir une signature du défaut y compris lorsque celle-ci est « noyée » dans un bruit de fond important (lié par exemple à une pluralité d'éléments tournants défectueux situés à proximité du roulement surveillé). En effet, les inventeurs ont eu l'idée judicieuse d'exploiter la caractéristique cyclostationnaire des signaux de vibrations générés par les défauts susceptibles d'affecter les roulements équipant les machines tournantes. Cette cyclostationnarité se traduit par la présence dans les signaux de vibrations d'un motif d'allure périodique, exploité par l'invention.

Il en découle une robustesse des indicateurs de diagnostic de défaut proposés par l'invention. Ces indicateurs sont en outre calculés en tenant compte d'une estimation de la fréquence « réelle » du défaut, qui peut être différente de la fréquence théorique caractéristique du défaut qui peut être obtenue aisément à partir des caractéristiques géométriques du roulement et de sa cinématique. On évite ainsi d'avoir des indicateurs biaisés par une connaissance imprécise de la fréquence du défaut. Au contraire, les indicateurs de diagnostic proposés par l'invention fournissent une estimation fiable et précise de la sévérité des défauts affectant le cas échéant les roulements surveillés.

Les indicateurs proposés par l'invention sont de plus faciles à calculer de sorte que la surveillance opérée grâce à l'invention peut être réalisée en temps réel.

L'invention permet donc une détection fiable et précoce d'un défaut affectant le cas échéant un roulement, et la localisation de ce défaut, moyennant une faible complexité d'implémentation.

En outre, grâce à l'invention, plusieurs roulements peuvent être surveillés en parallèle au moyen d'un seul capteur (par exemple un seul capteur accélérométrique). L'invention permet donc de minimiser le nombre de capteurs requis à bord d'un système incluant plusieurs roulements pour la surveillance de ces roulements, ce qui se traduit par un gain substantiel en termes d'encombrement par rapport à certaines techniques de surveillance de l'art antérieur.

L'invention a donc une application privilégiée mais non limitative dans le domaine de l'aéronautique. Le dispositif tournant dont un roulement est surveillé peut ainsi être embarqué dans un moteur d'aéronef, le roulement surveillé étant par exemple un roulement à billes ou à rouleaux équipant classiquement un tel moteur.

Ainsi, l'invention vise également un moteur d'aéronef comprenant au moins un roulement équipant un dispositif tournant du moteur d'aéronef, au moins un capteur accélérométrique apte à acquérir un signal vibratoire contenant une signature vibratoire du roulement, et un dispositif de surveillance du roulement selon l'invention.

On note toutefois que l'invention peut être appliquée dans de nombreux autres domaines, comme par exemple à des éoliennes, à des moteurs de voiture, à des engrenages, etc.

Dans un mode particulier de l'invention, le signal vibratoire a été acquis par le capteur accélérométrique lors d'un régime stationnaire du dispositif tournant (autrement dit lorsque ses paramètres de fonctionnement, tels que par exemple sa vitesse moyenne de rotation, sa pression, sa température, sa charge, etc., sont constantes ou quasi-constantes).

Toutefois cette hypothèse n'est pas limitative et l'invention peut également s'appliquer lorsque le signal vibratoire a été acquis lors d'un régime variable du dispositif tournant, préférentiellement lorsque les variations du régime restent de l'ordre de 15-20%. Dans ce cas, on considère dans l'invention des fréquences cycliques « normalisées » par rapport à la fréquence moyenne de rotation mécanique du roulement ; de telles fréquences normalisées sont aussi désignées plus communément sous l'appellation d' « ordres » et permettent de s'affranchir de la variabilité du régime de rotation du dispositif tournant.

Dans un mode particulier de réalisation, l'étape de traitement comprend une étape de blanchiment spectral du signal vibratoire.

Un tel blanchiment du spectre du signal vibratoire est particulièrement simple et rapide à mettre en œuvre. Il consiste à diviser la transformée de Fourier du signal vibratoire par son module tout en conservant sa phase, et peut donc être réalisé de manière aveugle, c'est-à-dire sans connaître les fréquences caractéristiques de la composante déterministe du signal. Bien que la composante aléatoire du signal vibratoire, qui contient la signature du défaut affectant le cas échéant le roulement, puisse être affaiblie par ce blanchiment, cet affaiblissement n'a que peu d'impact sur la détection du défaut en raison de l'indicateur de diagnostic proposé par l'invention qui est calculé à partir de la cohérence cyclique intégrée du signal vibratoire traité. Le calcul de la cohérence cyclique intégrée d'un signal comprend en effet implicitement une opération de blanchiment de sorte que l'opération de blanchiment réalisée lors de l'étape de traitement n'a pas ou peu d'effet sur l'indicateur de diagnostic calculé.

Dans un mode particulier de réalisation, l'étape de calcul de la cohérence cyclique intégrée comprend :

- l'estimation, pour une fréquence cyclique donnée, de la corrélation cyclique du signal vibratoire traité en fonction d'une fréquence spectrale ;
- le calcul, à partir de la corrélation cyclique estimée, de la cohérence cyclique du signal vibratoire traité pour ladite fréquence cyclique donnée en fonction de la fréquence spectrale ; et
- la moyenne, sur ladite bande de fréquences spectrales prédéterminée, de l'amplitude au carré de la cohérence cyclique du signal vibratoire traité calculée pour ladite fréquence cyclique donnée, le résultat de ladite moyenne fournissant la cohérence cyclique intégrée pour ladite fréquence cyclique donnée.

Cette manière de calculer la cohérence cyclique intégrée permet de conserver les informations contenues dans le signal vibratoire acquis par le capteur qui concernent le défaut affectant le cas échéant le roulement (et qui sont décrites par la fréquence cyclique), tout en maximisant le rapport signal-sur-bruit grâce à la moyenne effectuée sur une bande de fréquences spectrales prédéterminée.

Cette bande de fréquences est par exemple prise égale à $[k1.\Delta f ; k2.\Delta f]$, où $\Delta f$ désigne la résolution spectrale considérée pour estimer la cohérence cyclique, et k1 et k2 deux nombres réels ou entiers. Une telle plage de fréquences permet, en ajustant de façon adéquate les nombres k1 et k2, d'une part de minimiser la contribution de bruit stationnaire en basse fréquence (i.e. en dessous de $k1.\Delta f$) tout en éliminant le repliement cyclique à haute fréquence (i.e. au-dessus de $k2.\Delta f$).

On note qu'en variante, il est possible dans la moyenne calculée, d'élever l'amplitude de la cohérence cyclique à un ordre différent de l'ordre 2, comme par exemple à l'ordre 1 ou à l'ordre 4. Toutefois, les inventeurs ont constaté que plus l'ordre considéré est élevé, moins la détection du défaut est précoce.

Dans un mode particulier de réalisation, la corrélation cyclique du signal vibratoire traité est estimée au moyen d'un estimateur de Welch.

Cet estimateur présente l'avantage de disposer de propriétés statistiques remarquables et plus spécifiquement de fournir une estimation ayant une erreur quadratique faible.

En outre, il est particulièrement simple et facile à implémenter, et requiert un coût de calcul relativement faible.

Un tel estimateur est par ailleurs très efficace dans un contexte où des hautes vitesses de rotation sont considérées (ex. lorsque le dispositif tournant est embarqué à bord d'un aéronef tel qu'un avion ou un hélicoptère).

Bien entendu, d'autres estimateurs peuvent être utilisés pour estimer la corrélation cyclique du signal vibratoire traité, comme par exemple un estimateur par périodogramme cyclique, un estimateur par périodogramme cyclique lisse, un estimateur par spectre de modulation cyclique, etc.

Dans un mode particulier de réalisation, l'étape d'estimation de la fréquence réelle du défaut comprend le calcul de la cohérence cyclique intégrée pour une pluralité de fréquences cycliques comprises dans un intervalle défini entre la fréquence théorique caractéristique du défaut moins la déviation maximale définie pour cette fréquence théorique et la fréquence théorique caractéristique du défaut plus la déviation maximale définie pour cette fréquence théorique, la fréquence réelle du défaut correspondant à la fréquence cyclique parmi ladite pluralité de fréquences cycliques pour laquelle la cohérence cyclique intégrée calculée est maximale.

Ce mode de réalisation permet, en calculant la cohérence cyclique intégrée pour une pluralité de fréquences cycliques comprises dans un intervalle défini tel que proposé, de compenser la non connaissance de la fréquence exacte du défaut affectant le cas échéant le roulement. Cette difficulté est résolue dans ce mode de réalisation en considérant que la fréquence réelle du défaut est celle qui maximise la cohérence cyclique intégrée sur l'intervalle considéré défini autour de la fréquence théorique du défaut. Il convient de noter que dans le cas d'un roulement sain (i.e. ne présentant pas de défaut), la valeur obtenue pour la fréquence réelle du défaut n'est pas liée à proprement parler à un défaut ; ceci n'est pas gênant car, dans ce cas, l'indicateur calculé comme proposé dans l'invention aura une valeur qui ne dépassera par le seuil considéré lors de l'étape de comparaison (en effet, la probabilité pour qu'un autre élément tournant coïncide avec l'intervalle défini est nulle ou quasiment).

Dans un mode particulier de réalisation, deux fréquences cycliques consécutives de ladite pluralité de fréquences cycliques, notées respectivement $\alpha$ et $\alpha + \Delta\alpha$, sont choisies telles que le rapport $\alpha/d\alpha$ est un nombre entier.

L'application de ce critère pour choisir les fréquences cycliques auxquelles la cohérence cyclique intégré est calculée permet d'optimiser le coût de calcul.

Dans un mode particulier de réalisation, le nombre entier M est compris entre 6 et 10.

Le nombre d'harmoniques présentes dans le signal vibratoire dépend de l'impulsivité du signal vibratoire généré par ce défaut. De façon connue, l'impulsivité d'un signal traduit la présence de pics d'amplitudes élevées dans ce signal. Or cette impulsivité dépend elle-même de façon connue, de la sévérité du défaut affectant le roulement. Par conséquent, considérer pour déterminer l'indicateur de diagnostic une grande valeur de M offre la possibilité de tenir compte de davantage d'informations sur l'état du roulement et la sévérité du défaut affectant ce roulement. Toutefois, une grande valeur de M peut augmenter l'erreur d'estimation entachant l'indicateur calculé et réduire son efficacité en termes de précocité de la détection du défaut.

Au contraire, considérer une faible valeur de M permet d'améliorer la précocité de la détection du défaut.

Les inventeurs ont constaté en pratique qu'un nombre M compris entre 6 et 10 présente un bon compromis permettant d'assurer à la fois une détection précoce d'un défaut affectant le roulement tout en s'assurant que l'indicateur de diagnostic reflète de façon suffisamment pertinente la sévérité de ce défaut.

Dans un mode particulier de réalisation, le procédé de surveillance comprend en outre une étape de notification du défaut comprenant au moins une information parmi :

- une identification du roulement défectueux ;
- une indication d'un élément défectueux sur ledit roulement ; et/ou
- une indication d'une sévérité du défaut détecté sur le roulement.

Ceci permet d'avoir une maintenance adaptée sur le roulement surveillé.

Dans un mode particulier de réalisation, les différentes étapes du procédé surveillance sont déterminées par des instructions de programmes d'ordinateurs.

En conséquence, l'invention vise aussi un programme d'ordinateur sur un support d'informations, ce programme étant susceptible d'être mis en œuvre dans un dispositif de surveillance ou plus généralement dans un ordinateur, ce programme comportant des instructions adaptées à la mise en œuvre des étapes d'un procédé de surveillance tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente de façon schématique un dispositif de surveillance d'un roulement, conforme à l'invention dans un mode particulier de réalisation ;
- la figure 2 représente l'architecture matérielle du dispositif de surveillance du roulement de la figure 1 ; et
- la figure 3 illustre, sous forme d'ordinogramme, les principales étapes du procédé de surveillance selon l'invention dans un mode particulier de réalisation dans lequel il est mis en œuvre par le dispositif de surveillance de la figure 1.

Description détaillée d'un mode de réalisation

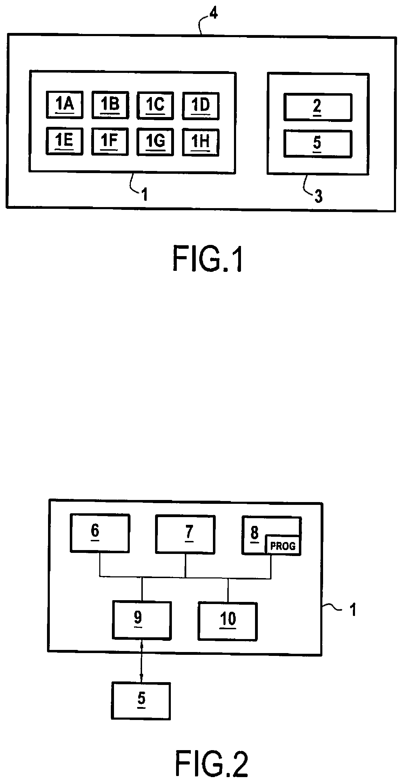

La **figure 1** représente, dans son environnement, un dispositif de surveillance 1 d'un roulement 2 équipant un dispositif mécanique tournant 3, conforme à l'invention dans un mode particulier de réalisation.

Dans l'exemple envisagé à la figure 1, le roulement 2 est un roulement à billes et le dispositif tournant 3 équipé de ce roulement à billes est par exemple un compresseur d'un turboréacteur 4 conforme à l'invention. Le roulement 2 est supposé ici permettre l'entraînement en rotation d'un arbre du compresseur 3 du turboréacteur 4 selon un axe de rotation prédéfini.

Cet exemple n'est toutefois donné qu'à titre illustratif, et l'invention peut s'appliquer également dans d'autres contextes. Ainsi par exemple, le roulement 2 peut être un roulement à rouleaux, le dispositif tournant 3 peut être n'importe quel dispositif mécanique tournant dont un élément est entraîné en rotation au moyen du roulement 2, et d'autres moteurs d'aéronef qu'un turboréacteur peuvent être envisagés. L'invention peut également s'appliquer dans un autre contexte que le contexte aéronautique.

Conformément à l'invention, le dispositif de surveillance 1 est apte à opérer une surveillance du roulement 2, à partir d'un signal vibratoire acquis par un capteur 5 équipant le turboréacteur 4 sur au moins une période de temps prédéfinie de durée T. Le capteur 5 est un accéléromètre placé ici sur le boîtier du compresseur 3 de sorte à capter les vibrations émises par le roulement 2 et plus particulièrement par ses éléments (signature vibratoire du roulement au sens de l'invention).

De façon connue en soi, un roulement à billes est composé de divers éléments, et plus particulièrement de deux bagues coaxiales (une bague dite interne ou intérieure et une bague dite externe ou extérieure) entre lesquelles sont placées des billes maintenues espacées par une cage. De la sorte, les billes peuvent rouler entre la bague interne et la bague externe. L'invention est destinée à permettre la détection d'un défaut affectant l'un au moins de ces éléments.

Le placement de l'accéléromètre 5 pour lui permettre d'acquérir un signal vibratoire contenant la signature vibratoire du roulement 2 ne pose aucune difficulté pour l'homme du métier, et dépend du dispositif mécanique tournant considéré et du contexte d'utilisation de ce dernier. Il n'est pas décrit en détail ici. Dans le cas d'un arbre d'un compresseur d'un turboréacteur tel qu'envisagé à la figure 1, l'accéléromètre 5 est par exemple placé sur le boîtier du compresseur 3.

En variante, l'accéléromètre 5 peut être placé en un endroit plus éloigné du roulement 2 à proprement parler dès lors qu'il permet d'acquérir un signal contenant une signature vibratoire du roulement 2 avec un rapport signal-sur-bruit préférentiellement supérieur à 5%.

Le signal vibratoire temporel noté X(t) acquis par l'accéléromètre 5 sur la période T lorsque le dispositif mécanique tournant 3 est en rotation, est traité par un système d'acquisition intégré ici dans l'accéléromètre 5 comprenant un conditionneur, un filtre analogique d'anti-repliement, un échantillonneur bloquer et un convertisseur analogique-numérique. Un tel système d'acquisition est connu en soi, et n'est pas décrit en détail ici. Il délivre un signal numérique échantillonné à une fréquence d'échantillonnage prédéfinie Fs et dérivé du signal vibratoire X(t) acquis par l'accéléromètre. On choisit la fréquence d'échantillonnage Fs suffisamment grande pour conserver les informations cinématiques et dynamiques du roulement 2. Dans un contexte aéronautique tel que celui envisagé à la figure 1, Fs est prise égale par exemple à 50kHz. On suppose ici que la période T sur laquelle est acquis le signal vibratoire X est un multiple L de la période d'échantillonnage soit : T=L/Fs. L désigne de façon équivalente la longueur numérique du signal vibratoire (i.e. le nombre d'échantillons Xb(n) dérivés par le système d'acquisition à partir du signal vibratoire X(t) acquis par l'accéléromètre 5).

Le signal vibratoire échantillonné (signal vibratoire au sens de l'invention), dont les échantillons sont référencés dans la suite de la description par $X_b(n)$, où n désigne un entier supérieur à 1, est ensuite transmis au dispositif de surveillance 1 pour analyse en vue de détecter la présence d'un éventuel défaut sur le roulement 2. Dans le mode de réalisation décrit ici, cette analyse est destinée à être réalisée en temps réel, et le dispositif de surveillance 1 est embarqué à bord de l'aéronef propulsé par le turboréacteur 4 (par exemple dans un calculateur de ce turboréacteur 4).

En variante, le dispositif de surveillance 1 peut être localisé dans un dispositif distant, par exemple dans l'exemple envisagé ici, dans un dispositif au sol apte à communiquer via un réseau de télécommunications avec l'accéléromètre 5 ou avec un calculateur du turboréacteur 4 apte à récupérer le signal vibratoire X(t) acquis par l'accéléromètre 5.

Dans le mode de réalisation décrit ici, le dispositif de surveillance 1 a l'architecture matérielle d'un ordinateur, telle qu'illustrée à la **figure 2.**

Il comprend notamment un processeur 6, une mémoire vive 7, une mémoire morte 8, une mémoire flash non volatile 9 ainsi que des moyens de communication 10 permettant notamment au dispositif de surveillance 1 de communiquer avec l'accéléromètre 5 pour obtenir le signal vibratoire s(t) généré par le roulement 2 et acquis par ce dernier. Ces moyens de communication comprennent par exemple un bus de données numériques ou toute autre interface de communication, notamment une interface de communication sur un réseau de télécommunications, lorsque le dispositif de surveillance 1 ne se trouve pas à bord de l'aéronef propulsé par le turboréacteur 4.

La mémoire morte 8 du dispositif de surveillance 1 constitue un support d'enregistrement conforme à l'invention, lisible par le processeur 6 et sur lequel est enregistré un programme d'ordinateur PROG conforme à l'invention.

Le programme d'ordinateur PROG définit des modules fonctionnels et logiciels ici, configurés pour mettre en œuvre un procédé de surveillance du roulement 2 conforme à l'invention. Ces modules fonctionnels s'appuient sur et/ou commandent les éléments matériels 6-10 du dispositif de surveillance 1 cités précédemment. Ils comportent notamment ici, comme illustré sur la figure 1 :

- un premier module d'obtention 1A, configuré pour obtenir le signal vibratoire s(t) acquis par l'accéléromètre 5 ;
- un module de traitement 1B du signal vibratoire s(t), configuré pour éliminer une composante déterministe du signal vibratoire ;

- un deuxième module d'obtention 1C, configuré pour obtenir pour un défaut déterminé noté d susceptible d'affecter le roulement 2, une fréquence théorique caractéristique de ce défaut notée $\beta_d^{th}$ et une déviation maximale notée $\delta\beta_d$ déterminée autour de cette fréquence théorique. Cette déviation maximale caractérise l'écart maximale possible que l'on s'accorde entre la fréquence théorique caractéristique du défaut et la fréquence réelle ou exacte de ce défaut ;
- un premier module de calcul 1D, configuré pour calculer, en fonction de la fréquence cyclique notée ici $\alpha$, une cohérence cyclique dite intégrée du signal vibratoire traité, moyennée sur une bande de fréquences spectrales prédéterminée choisie ici de sorte à maximiser le rapport signal-sur-bruit ;
- un module d'estimation 1E, configuré pour estimer la fréquence réelle du défaut notée $\beta_d^{act}$ à partir de la cohérence cyclique intégrée calculée par le premier module de calcul 1D, de la fréquence théorique $\beta_d^{th}$ caractéristique du défaut et de la déviation maximale $\delta\beta_d$ déterminée autour de cette fréquence théorique ;
- un deuxième module de calcul 1F d'un indicateur de diagnostic du défaut, configuré pour calculer cet indicateur en sommant un nombre entier M de cohérences cycliques intégrées du signal vibratoire traité évaluées en M fréquences cycliques égales respectivement à M harmoniques de la fréquence réelle estimée du défaut ;
- un module de comparaison 1G, configuré pour comparer l'indicateur de diagnostic du défaut calculé par le deuxième module de calcul 1F avec un seuil prédéterminé pour ce défaut et pour détecter le défaut sur le roulement en cas de dépassement du seuil par l'indicateur de diagnostic.

Dans le mode de réalisation décrit ici, le dispositif de surveillance 1 dispose en outre d'un module de notification 1H, apte à notifier un utilisateur ou un équipement distant de l'existence d'un défaut sur le roulement 2 le cas échéant. Ce module de notification 1H peut s'appuyer notamment sur les moyens de communication 10 du dispositif de surveillance 1 ou sur des moyens d'entrée/sortie de celui-ci, comme par exemple un écran ou un microphone apte à signaler la détection d'un défaut sur le roulement 2 à un utilisateur installé à proximité du dispositif de surveillance 1.

Les fonctions de ces différents modules sont décrites plus en détail maintenant en référence aux étapes du procédé de surveillance selon l'invention.

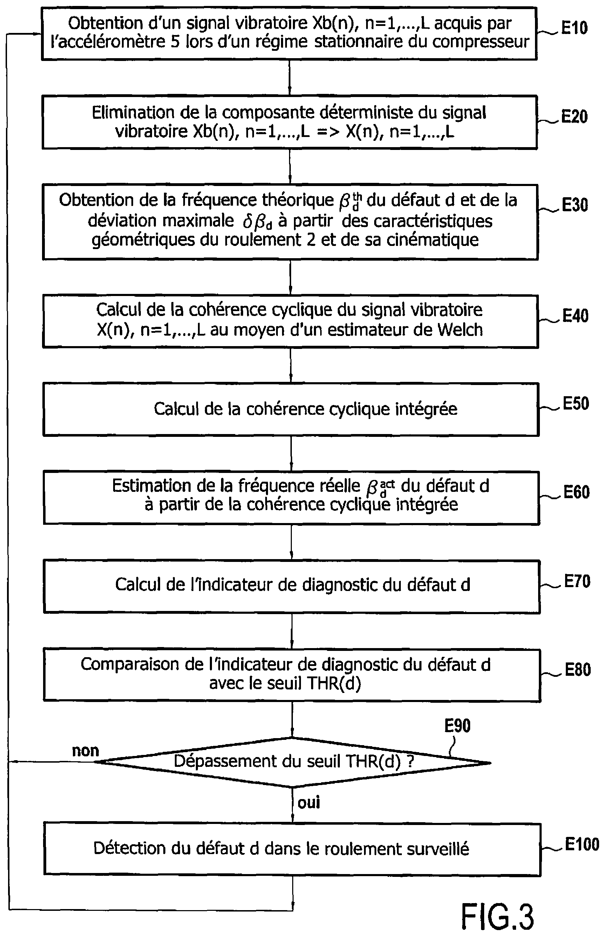

La **figure 3** illustre, sous forme d'ordinogramme, les principales étapes d'un procédé de surveillance selon l'invention dans un mode particulier de réalisation dans lequel il est mis en œuvre par le dispositif de surveillance 1 pour surveiller le roulement 2 équipant le compresseur 3 du turboréacteur 4.

On suppose ici que l'accéléromètre 5 est configuré de sorte à acquérir sur une période de temps de durée T=L/Fs, un signal vibratoire X(t) d'accélération généré par le roulement 2 alors que le compresseur 3 est en rotation entraînée par le roulement 2. L'accéléromètre 5 est configuré ici pour acquérir le signal vibratoire X(t) lorsque le compresseur 3 fonctionne dans un régime stationnaire ou quasi-stationnaire : dans l'exemple envisagé ici, cela signifie que la vitesse de rotation du compresseur et/ou sa charge (i.e. son couple) sont constantes ou quasi-constantes (variation de moins de 5% de la vitesse de rotation du compresseur et de sa charge). On note que la durée T ne doit pas être choisie trop courte de sorte à assurer la précision des indicateurs de diagnostic dérivés par l'invention. Pour une fréquence d'échantillonnage Fs=50kHz, une durée T=2s représente un bon compromis.

Le signal vibratoire X(t) acquis par l'accéléromètre 5 est échantillonné par le système d'acquisition de l'accéléromètre 5, à la fréquence d'échantillonnage Fs. Le signal vibratoire échantillonné Xb(n), n=1,...,L, est transmis par le système d'acquisition de l'accéléromètre 5 au dispositif de surveillance 1, et plus particulièrement à son premier module d'obtention 1A (étape E10). Le signal vibratoire échantillonné Xb(n) est désigné plus simplement dans la suite de la description par signal vibratoire.

Le signal vibratoire Xb(n), n=1,...,L est fourni par le module d'obtention 1A au module de traitement 1B du dispositif de surveillance 1. De façon connue en soi, le signal vibratoire Xb(n), n=1,...,L comprend une composante déterministe et une composante aléatoire ; c'est dans cette composante aléatoire que se manifestent le cas échéant, les vibrations liées au(x) défaut(s) affectant le roulement 2.

Pour mieux faire ressortir les vibrations liées au(x) défaut(s) affectant le cas échéant le roulement 2, le module de traitement 1B traite le signal vibratoire Xb(n), n=1,...,L afin d'éliminer sa composante déterministe (étape E20).

Dans le mode de réalisation décrit ici, l'élimination de la composante déterministe du signal vibratoire est réalisée par le module de traitement 1B via une opération de blanchiment spectral. Pour réaliser cette opération, le module de traitement 1B calcule tout d'abord la transformée de Fourier discrète du signal vibratoire Xb(n). On note $DFT_{n\rightarrow m}\{Xb(n)\}$ cette transformée de Fourier discrète. Elle est définie de façon connue par :

$$DFT_{n\rightarrow k}^{W}\{X(n)\} = \sum_{n=0}^{W-1} X(n)e^{-j2\pi(n\Delta t)(k\Delta f)}$$

où :

$$\Delta f = \frac{1}{\Delta t.W} = \frac{F_s}{W}$$

désigne la résolution fréquentielle, W représentant la taille de la fenêtre sur laquelle est calculée la transformée de Fourier discrète, et

$$\Delta t = \frac{1}{F_s}$$

désigne la résolution temporelle.

Puis le module de traitement 1B divise la transformée de Fourier discrète obtenue par le module de la transformée de Fourier discrète, et calcule la transformée de Fourier discrète inverse du résultat obtenu. Autrement dit, le module de traitement 1B calcule le signal X(n) suivant, pour n=1,...,L (signal vibratoire traité au sens de l'invention) :

$$X(n) = IDFT_{m \to n}^{L} \left\{ \frac{DFT_{n \to m}\{Xb(n)\}}{|DFT_{n \to m}\{Xb(n)|\}} \right\}$$

où $IDFT_{m \to n}^{L}$ désigne la transformée de Fourier discrète inverse définie comme suit

$$IDFT_{n \to k}^{W}\{X(n)\} = \frac{1}{W} \sum_{n=0}^{W-1} X(n)e^{+j2\pi(n\Delta t)(k\Delta f)}$$

en considérant les mêmes notations utilisées lors de la définition de la transformée de Fourier discrète.

De la sorte, la phase du signal vibratoire Xb(n) est conservée.

Cette opération de blanchiment présente l'avantage d'être simple à mettre en œuvre.

En variante, d'autres techniques peuvent être appliquées par le module de traitement 1B pour éliminer la composante déterministe du signal Xb(n). Une telle technique est décrite par exemple dans le document de N. Sawalhi et al. Intitulé «Signal pre-whitening using cepstrum editing (liftering) to enhance fault detection in rolling element bearings », Proceedings of the 24th International Congress on Condition Monitoring and Diagnostics Engineering Management (COMADEM), 2011. Elle consiste à annuler tout le cepstre complexe du signal vibratoire en conservant uniquement la composante du signal relative à la fréquence zéro.

Le signal vibratoire traité X(n), n=1,...,L (et blanchi) est transmis au premier module de calcul 1D du dispositif de surveillance 1 pour qu'il analyse la cyclostationnarité du signal. En effet, la présence d'un défaut sur le roulement 2 se manifeste par une composante dans le signal cyclostationnaire qui se traduit par une fonction d'auto-covariance périodique. Cette propriété de cyclostationnarité est due principalement d'une part, à la récurrence du défaut sur une base périodique (liée à la rotation du dispositif tournant entraîné par le roulement), et d'autre part, à la présence d'une fluctuation entre les temps d'arrivée des impacts causés par le glissement des billes du roulement 2.

Chaque défaut d susceptible d'affecter un roulement est caractérisé par une fréquence spécifique. Aucune limitation n'est attachée à la nature du défaut d, celui-ci pouvant porter sur un ou plusieurs éléments du roulement. Ainsi par exemple, le défaut d peut être un défaut de la bague externe du roulement 2, un défaut de la bague interne du roulement 2, un défaut de la cage du roulement 2 ou d'une bille du roulement 2. Chacun de ces défauts est caractérisée par une fréquence caractéristique qui lui est propre.

Cette fréquence caractéristique du défaut d considéré peut être estimée (obtenue) aisément de façon théorique par le deuxième module d'obtention 1C du dispositif de surveillance 1 à partir de la connaissance des caractéristiques géométriques du roulement 2 et de sa cinématique (étape E30). On note $\beta_d^{th}$ la fréquence théorique caractéristique du défaut d. Les caractéristiques géométriques du roulement 2 peuvent être obtenues aisément à partir de la fiche technique du roulement 2. La cinématique du roulement (i.e. sa vitesse de rotation) peut être obtenue via un capteur placé de façon appropriée au sein du compresseur 3, de façon connue en soi. Ainsi, à titre illustratif :

- la fréquence théorique caractéristique $f_{d=bext}$ d'un défaut d de la bague externe du roulement est donnée par :

$$f_{d=bext} = \frac{f_r}{2} N_B \left( 1 - \frac{D_B \cos\psi}{D_p} \right)$$

- la fréquence théorique caractéristique $f_{d=bint}$ d'un défaut d de la bague interne du roulement est donnée par :

$$f_{d=bint} = \frac{f_r}{2} N_B \left( 1 + \frac{D_B \cos\psi}{D_p} \right)$$

- la fréquence théorique caractéristique $f_{d=c}$ d'un défaut d de la cage du roulement est donnée par :

$$f_{d=c} = \frac{f_r}{2} \left( 1 - \frac{D_B \cos\psi}{D_p} \right)$$

- la fréquence théorique caractéristique $f_{d=bille}$ d'un défaut d d'une bille du roulement est donnée par :

$$f_{d=bille} = \frac{f_r}{2} N_B \left( 1 - \left( \frac{D_B \cos\psi}{D_p} \right)^2 \right)$$

où :

- $f_r$ désigne la fréquence de rotation mécanique du roulement 2 ;
- $N_B$ désigne le nombre de billes du roulement 2 ;
- $D_B$ désigne le diamètre des billes du roulement 2 ;
- $D_P$ désigne le diamètre moyen du roulement 2 ; et
- $\psi$ désigne l'angle de contact du roulement 2.

Le deuxième module d'obtention 1C obtient également pour chaque défaut d considéré, une déviation maximale $\delta\beta_d$ déterminée autour de la fréquence théorique $\beta_d^{th}$ caractéristique du défaut d. Dans l'exemple envisagé ici, on suppose par souci de simplification que cette déviation maximale est la même en pourcentage quel que soit le défaut d envisagé, soit $\delta\beta_d = A\beta_d^{th}$ avec A désignant une constante réelle indépendante du défaut d. En pratique, les inventeurs ont constaté qu'il suffit de choisir la déviation maximale égale à quelques pourcents de la fréquence théorique caractéristique du défaut ; par exemple $A = 3\%$.

Puis, dans le mode de réalisation décrit ici, le premier module de calcul 1D du dispositif de surveillance 1 calcule la cohérence cyclique du signal vibratoire traité X(n), n=1,...,L (étape E40).

De façon connue, la cohérence cyclique d'un signal est une mesure statistique qui permet de mesurer pour chaque fréquence dite cyclique le degré de corrélation entre le signal et ce même signal décalé en fréquence. Une cohérence proche de un pour une fréquence cyclique cyclique $\alpha$ indique une forte corrélation entre les composantes du signal considéré aux fréquences f et f- $\alpha$.

Pour calculer la cohérence cyclique du signal X(n) à la fréquence cyclique $\alpha$, n=1,..,L, le premier module de calcul 1D utilise ici un estimateur de Welch de la corrélation cyclique du signal, qui s'écrit de la façon suivante, à un facteur près :

$$\widehat{S_{2X}^\alpha}(k\Delta f) = \sum_s^{S-1} DFT_{n\to k}^{Nw}\{ w_s(n)X(n)e^{j\pi\alpha n\Delta t} \}^* DFT_{n\to k}^{Nw}\{ w_s(n)X(n)e^{-j\pi\alpha n\Delta t} \}$$

où :

- \* désigne l'opérateur de conjugaison ;
- w(n) désigne une fenêtre glissante (ex. fenêtre de Hanning, demi-sinus, etc) et $w_s(n)$ = $w_s(n - sR)$est la version décalée de la fenêtre glissante avec 1<R<Nw, Nw désignant un nombre entier (ex. une puissance de 2) représentant la taille de la fenêtre de Welch, Nw-R désignant le recouvrement entre les fenêtres ;
- S est le plus grand entier inférieur ou égal à (L-Nw)/R+1 ;
- $\Delta f$ désigne la résolution fréquentielle ou spectrale, qui est égale à $1/(\Delta t.\ Nw)$. On choisira préférentiellement la taille de la fenêtre de Welch Nw de sorte à avoir une résolution spectrale de l'ordre de quelques centaines de hertz dans le cas d'application envisagé ici ;
- k est un nombre entier, désignant le canal spectral considéré.

On considère ici comme résolution de la fréquence cyclique $\Delta\alpha$ = 1/T pour calculer la corrélation cyclique.

On note que dans l'estimateur de Welch défini ci-dessus, la fréquence cyclique $\alpha$ est une fréquence exprimée en hertz.

Bien entendu, d'autres estimateurs peuvent être utilisés en variante pour estimer la corrélation cyclique du signal vibratoire traité, comme par exemple un estimateur par périodogramme cyclique, un estimateur par périodogramme cyclique lisse, un estimateur par spectre de modulation cyclique, etc.

Puis le module de calcul 1D dérive à partir de l'estimateur de Welch ainsi calculé la cohérence cyclique du signal X(n), n=1,...,L de la façon suivante :

$$\widehat{\gamma_{2X}^{\alpha}}(k\Delta f) = \frac{\widehat{S_{2X}^{\alpha}}(k\Delta f)}{\left(\widehat{S_{2X}^{0}}(k\Delta f - \alpha/2)\widehat{S_{2X}^{0}}(k\Delta f + \alpha/2)\right)^{1/2}}$$

On note que la corrélation cyclique et la cohérence cyclique ainsi calculées sont des fonctions de la fréquence spectrale $k\Delta f$ et sont indexées par la fréquence cyclique $\alpha$ (elles sont donc également fonctions de cette fréquence cyclique), celle-ci étant exprimée en hertz. La fréquence spectrale fait ressortir des caractéristiques dynamiques du système considéré, tandis que la fréquence cyclique s'attache aux modulations (principalement liées au défaut affectant le cas échéant le roulement 2). Les inventeurs ont donc souhaité garder l'information cyclique portée par la fréquence cyclique, mais moyenné l'information portée par la fréquence spectrale sur une bande de fréquence choisie de sorte à maximiser le rapport signal-sur-bruit.

A cet effet, le premier module de calcul 1D calcule une cohérence cyclique dite intégrée en évaluant la moyenne du carré de l'amplitude de la cohérence cyclique par rapport à la fréquence cyclique sur une bande de fréquences choisie de sorte à maximiser le rapport signal-sur-bruit (étape E50). Cette bande de fréquences est définie ici par l'intervalle [k1$\Delta f$ ;k2$\Delta f$], où k1 et k2 désignent deux entiers. La cohérence cyclique intégrée calculée par le premier module de calcul 1D est ainsi donnée par l'expression suivante :

$$\widehat{I_{2X}^{\alpha}} = \frac{1}{k1 - k1 + 1}\sum_{k1}^{k2}\left|\widehat{\gamma_{2X}^{\alpha}}(k\Delta f)\right|^{2}$$

Dans l'exemple envisagé ici, pour une fréquence d'échantillonnage Fs=50kHz, on choisit k1$\Delta f$~1kHz et k2$\Delta f$~20kHz. Ces valeurs permettent de minimiser la contribution du bruit stationnaire en basse fréquence (en dessous de k1$\Delta f$) et d'éliminer le repliement cyclique à haute fréquence (au dessus de k2$\Delta f$).

Bien entendu ces valeurs ne sont données qu'à titre illustratif et d'autres valeurs peuvent être considérées. De manière générale, on s'assurera préférentiellement que k2$\Delta f$ < Fs - $\alpha_{max}$ où $\alpha_{max}$ désigne la valeur cyclique maximale recherchée et donc dépend de la fréquence caractéristique théorique du défaut et de son ordre d'harmoniques (on tient compte ici du principe que l'information utile pour diagnostiquer un défaut du roulement ne se trouve généralement pas aux extrémités).

On note par ailleurs que dans le mode de réalisation décrit ici, on a considéré dans la moyenne calculée pour obtenir la corrélation cyclique intégrée le carré de l'amplitude de la cohérence cyclique. En variante, on peut envisager d'élever la cohérence cyclique à un autre ordre que l'ordre 2, par exemple à l'ordre 1 ou à l'ordre 4.

La cohérence cyclique intégrée calculée par le premier module de calcul 1D est alors utilisée par le dispositif de surveillance 1 pour dériver un indicateur de diagnostic du défaut d.

Plus spécifiquement, à cet effet, le dispositif de surveillance 1, via son module d'estimation 1E, estime tout d'abord la fréquence « réelle » (ou encore exacte) du défaut d (étape E60). Comme mentionné précédemment et par définition, cette fréquence réelle caractéristique du défaut est comprise dans l'intervalle [ $\beta_d^{th} - \delta\beta_d$ ; $\beta_d^{th} + \delta\beta_d$ ]. Pour estimer cette fréquence réelle, le module d'estimation 1E calcule la cohérence cyclique intégrée pour une pluralité de fréquences cycliques α comprises dans cet intervalle. Dans le mode de réalisation décrit ici, on suppose une résolution notées respectivement Δα entre deux fréquences cycliques consécutives considérées par le module d'estimation 1E choisie telle que le rapport α/Δα soit un nombre entier. Ce critère permet d'optimiser le coût de calcul de la cohérence cyclique intégrée aux différentes fréquences cycliques considérées.

Puis le module d'estimation 1E estime la fréquence réelle du défaut, notée $\beta_d^{act}$, comme étant la valeur de la fréquence cyclique correspondant à la valeur maximale des cohérences cycliques intégrées calculées, soit :

$$\beta_d^{act} = argmax_{\beta_d^{th} - \delta\beta_d \leq \alpha \leq \beta_d^{th} + \delta\beta_d}\ \widehat{I_{2X}^\alpha}$$

On note que dans le cas où le roulement 2 ne présente pas le défaut d, la valeur $\beta_d^{act}$ n'a pas de signification à proprement parler et ne présente pas la fréquence d'un défaut du roulement. Ceci ne constitue pas un problème en soi ; en effet, il est fortement improbable que le roulement 2 soit affecté d'un défaut distinct du défaut d ayant une fréquence réelle comprise dans l'intervalle [ $\beta_d^{th} - \delta\beta_d$ ; $\beta_d^{th} + \delta\beta_d$ ].

Puis le dispositif de surveillance 1, par l'intermédiaire de son deuxième module de calcul 1F, calcule un indicateur de diagnostic du défaut d (étape E70). Cet indicateur, noté $\mu_X^d$, est la somme des cohérences cycliques intégrées évaluées en M fréquences cycliques égales respectivement aux M harmoniques de la fréquence réelle $\beta_d^{act}$ estimée du défaut, M désignant un nombre entier, soit :

$$\mu_X^d(M) = \sum_{m=1}^{M} \widehat{I_{2X}^{m\beta_d^{act}}}$$

Cet indicateur mesure avantageusement la cyclostationnarité dans le signal X, et par conséquent la contribution du défaut d associé à la fréquence $\beta_d^{act}$.

Dans le mode de réalisation décrit ici, M a une valeur prédéterminée choisie entre 6 et 10.

On note que M désigne le nombre d'harmoniques du défaut d considérées. Le nombre d'harmoniques présent dans le signal généré par le défaut dépend de l'impulsivité du signal, qui à son tour est liée à la sévérité du défaut. Ainsi, prendre une grande valeur de M fournit plus d'informations sur l'état du défaut. Toutefois, prendre une plus petite valeur de M permet d'améliorer la précocité de la détection du défaut. En effet, les inventeurs ont constaté que dans le cas d'un défaut distribué, peu d'harmoniques sont présentes dans la cohérence cyclique intégrée, donc la somme d'un grand nombre d'harmoniques conduit à une augmentation de l'erreur d'estimation, et donc réduit l'efficacité de l'indicateur calculé en termes de précocité de détection.

Dans une variante de réalisation, le module d'estimation 1F peut estimer différents indicateurs de diagnostic en considérant différentes valeurs de l'entier M.

L'indicateur de diagnostic $\mu_X^d(M)$ ainsi calculé est fourni au module de comparaison 1G du dispositif de surveillance 1. Celui-ci compare alors l'indicateur $\mu_X^d(M)$ avec un seuil d'alerte prédéterminé pour le défaut d, noté THR(d) (étape E80). Ce seuil est choisi de sorte à permettre la détection du défaut d. Il peut être déterminé préalablement de façon empirique en observant des roulements sains et des roulements présentant le défaut d, ou par un calcul statistique sous l'hypothèse de stationnarité dans le cas sain. La valeur du seuil THR(d) ne doit pas être choisie trop élevée de sorte à assurer une détection précoce tout en n'étant pas trop basse non plus pour éviter de multiplier les fausses alarmes.

Si le module de comparaison 1G détermine que l'indicateur de diagnostic dépasse le seuil THR(d) (i.e. est supérieur à celui-ci) (réponse oui à l'étape test E90), alors il détecte que le roulement 2 est affecté du défaut d (étape E100).

Dans le mode de réalisation décrit ici, cette détection est alors notifiée par le module de notification 1H via un message d'alarme, comprenant tout ou partie des informations suivantes :

- identification du roulement défectueux (à savoir ici le roulement 2) ;
- indication de l'élément défectueux sur le roulement (dépend du défaut d détecté) ; et
- indication de la sévérité du défaut détecté sur le roulement 2 (donnée par la valeur de l'indicateur $\mu_X^d(M)$ ).

Puis la surveillance du roulement 2 est reprise (répétition des étapes E10 à E100).

On note que ce qui vient d'être décrit pour le défaut d peut être réalisé pour différents défauts susceptibles d'affecter le roulement 2. De la sorte, le dispositif de surveillance 1 est en mesure de réaliser un diagnostic différentiel et d'identifier quel défaut affecte le roulement 2, c'est-à-dire de localiser l'origine ou les origines des dégradations subies par le roulement 2 (bague interne, bague externe, billes, cage).

Dans le mode de réalisation décrit ici, le signal vibratoire X(t) acquis par l'accéléromètre 5 a été acquis lors d'un régime stationnaire du compresseur 3.

Dans un autre mode de réalisation de l'invention, on peut considérer un signal vibratoire acquis lorsque le régime de rotation du compresseur 3 connait une certaine variabilité, typiquement jusqu'à 15-20%.

Dans un tel contexte, on considère préférentiellement une fréquence cyclique normalisée notée $\tilde{\alpha}$ par rapport à la fréquence de rotation $f_r$ moyenne en hertz du roulement 2 sur la période d'acquisition T considérée, soit :

$$\tilde{\alpha} = \frac{\alpha}{f_r}$$

Une telle fréquence normalisée est également appelée plus communément « ordre ».

Dans ce mode de réalisation, lors de l'étape E40, le premier module de calcul 1D utilise alors l'estimateur de Welch de la corrélation cyclique du signal à phase corrigée, qui s'écrit de la façon suivante, à un facteur près :

$$\widehat{S_{2X}^{\tilde{\alpha}}}(k\Delta f) = \sum_{s}^{S-1} DFT_{n\to k}^{Nw}\{w_s(n)X(n)e^{j\pi\tilde{\alpha}\theta(n)/2}\}^* DFT_{n\Delta t\to k\Delta f}^{Nw}\{w_s(n)X(n)e^{-j\pi\tilde{\alpha}\theta(n)/2}\}$$

où θ(n) désigne la mesure angulaire d'un arbre de référence (arbre de rotation du compresseur 3 ici) qui permet d'évaluer la fréquence de rotation $f_r$ du roulement.

Le premier module de calcul 1D dérive ensuite à partir de cet estimateur de Welch la cohérence cyclique à phase corrigée du signal X(n), n=1,...,L de la façon suivante :

$$\widehat{\gamma_{2X}^{\tilde{\alpha}}}(k\Delta f) = \frac{\widehat{S_{2X}^{\tilde{\alpha}}}(k\Delta f)}{\left(\widehat{S_{2X}^{0}}(k\Delta f - \tilde{\alpha}.f_r/2)\widehat{S_{2X}^{0}}(k\Delta f + \tilde{\alpha}.f_r/2)\right)^{1/2}}$$

Les autres étapes du procédé restent inchangées dès lors que l'on considère des fréquences normalisées au lieu de fréquences exprimées en hertz. Ainsi, les fréquences théoriques des défauts sont les mêmes que celles introduites précédemment au facteur $f_r$ près (i.e. on divise ces fréquences théoriques par $f_r$).

Par ailleurs, dans les modes de réalisation décrits ici, on a considéré par souci de simplification, le signal issu d'un seul accéléromètre. L'invention peut toutefois s'appliquer à plusieurs accéléromètres. De même elle permet de surveiller simultanément plusieurs roulements.

L'invention propose ainsi une technique de surveillance robuste des roulements intégrés dans un dispositif tournant. Les inventeurs ont pu constater, lors de diverses expériences, que cette technique permet une détection précoce des défauts affectant les roulements, plus précoce notamment que la technique de l'art antérieur proposée dans le document EP 2 693 176, et ce dans divers contextes (accéléromètre placé sur le roulement défectueux ou éloigné de celui-ci, en présence ou non d'interférences électromagnétiques).

On note que l'invention a été décrite en référence à un signal vibratoire acquis au moyen d'un accéléromètre. La méthode de surveillance proposée par l'invention peut toutefois également s'appliquer à un signal acoustique, acquis par exemple au moyen d'un microphone ou de tout autre capteur acoustique, et contenant une signature acoustique du roulement que l'on souhaite surveiller.

**Revendications**

1. Procédé de surveillance d'un roulement (2) équipant un dispositif tournant (3), comprenant :

   - une étape d'obtention (E10) d'un signal vibratoire acquis par un capteur accélérométrique, ledit signal vibratoire comprenant une signature vibratoire du roulement ;
   - une étape de traitement (E20) du signal vibratoire comprenant l'élimination d'une composante déterministe du signal vibratoire ;
   - une étape d'obtention (E30), pour un défaut déterminé susceptible d'affecter le roulement, d'une fréquence théorique caractéristique de ce défaut et d'une déviation maximale déterminée autour de cette fréquence théorique ;
   - une étape de calcul (E40-E50), en fonction d'une fréquence cyclique, d'une cohérence cyclique dite intégrée du signal vibratoire traité moyennée sur une bande de fréquences spectrales prédéterminée ;
   - une étape d'estimation (E60) d'une fréquence dite réelle du défaut à partir de la cohérence cyclique intégrée, de la fréquence théorique caractéristique du défaut et de la déviation maximale déterminée autour de cette fréquence théorique ;
   - une étape de calcul (E70) d'un indicateur de diagnostic du défaut en sommant un nombre entier M de cohérences cycliques intégrées du signal vibratoire évaluées en M fréquences cycliques égales respectivement à M harmoniques de la fréquence réelle estimée du défaut ;
   - une étape de comparaison (E80-E90) de l'indicateur de diagnostic du défaut avec un seuil prédéterminé pour ce défaut ; et
   - en cas de dépassement du seuil par l'indicateur de diagnostic, une étape de détection (E100) du défaut sur le roulement.

2. Procédé de surveillance selon la revendication 1 dans lequel l'étape de traitement comprend une étape de blanchiment spectral du signal vibratoire.

3. Procédé de surveillance selon la revendication 1 ou 2 dans lequel l'étape de calcul de la cohérence cyclique intégrée comprend :

   - l'estimation (E40), pour une fréquence cyclique donnée, de la corrélation cyclique du signal vibratoire traité en fonction d'une fréquence spectrale ;
   - le calcul (E40), à partir de la corrélation cyclique estimée, de la cohérence cyclique du signal vibratoire traité pour ladite fréquence cyclique donnée en fonction de la fréquence spectrale ; et
   - la moyenne (E50), sur ladite bande de fréquences spectrales prédéterminée, de l'amplitude au carré de la cohérence cyclique du signal vibratoire traité calculée pour ladite fréquence cyclique donnée, le résultat de ladite moyenne fournissant la cohérence cyclique intégrée pour ladite fréquence cyclique donnée.

4. Procédé de surveillance selon la revendication 3 dans lequel la corrélation cyclique du signal vibratoire traité est estimée au moyen d'un estimateur de Welch.

5. Procédé de surveillance selon l'une quelconque des revendications 1 à 4 dans lequel l'étape d'estimation (E60) de la fréquence réelle du défaut comprend le calcul de la cohérence cyclique intégrée pour une pluralité de fréquences cycliques comprises dans un intervalle défini entre la fréquence théorique caractéristique du défaut moins la déviation maximale définie pour cette fréquence théorique et la fréquence théorique caractéristique du défaut plus la déviation maximale définie pour cette fréquence théorique, la fréquence réelle du défaut correspondant à la fréquence cyclique parmi ladite pluralité de fréquences cycliques pour laquelle la cohérence cyclique intégrée calculée est maximale.

6. Procédé de surveillance selon la revendication 5 dans lequel deux fréquences cycliques consécutives de ladite pluralité de fréquences cycliques, notées respectivement $\alpha$ et $\alpha + \Delta\alpha$, sont choisies telles que le rapport $\alpha/d\alpha$ est un nombre entier.

7. Procédé de surveillance selon l'une quelconque des revendications 1 à 6 dans lequel le nombre entier M est compris entre 6 et 10.

8. Procédé de surveillance selon l'une quelconque des revendications 1 à 7 comprenant en outre une étape de notification dudit défaut comprenant au moins une information parmi :

- une identification du roulement défectueux ;
- une indication d'un élément défectueux sur ledit roulement ; et/ou
- une indication d'une sévérité du défaut détecté sur le roulement.

9. Procédé de surveillance selon l'une quelconque des revendications 1 à 8 dans lequel le signal vibratoire a été acquis par le capteur accélérométrique lors d'un régime stationnaire du dispositif tournant.

10. Procédé de surveillance selon l'une quelconque des revendications 1 à 9 dans lequel la fréquence cyclique est normalisée par rapport à la fréquence de rotation du roulement.

11. Programme d'ordinateur (PROG) comportant des instructions pour l'exécution des étapes du procédé de surveillance selon l'une quelconque des revendications 1 à 10 lorsque ledit programme est exécuté par un ordinateur.

12. Support d'enregistrement lisible par un ordinateur sur lequel est enregistré un programme d'ordinateur selon la revendication 11.

13. Dispositif de surveillance (1) d'un roulement (2) équipant un dispositif tournant (3), ledit dispositif de surveillance comprenant :

   - un premier module d'obtention (1A), configuré pour obtenir un signal vibratoire acquis par un capteur accélérométrique, ledit signal vibratoire comprenant une signature vibratoire du roulement ;
   - un module de traitement (1B) du signal vibratoire, configuré pour éliminer une composante déterministe du signal vibratoire ;
   - un deuxième module d'obtention (1C), configuré pour obtenir pour un défaut déterminé susceptible d'affecter le roulement, une fréquence théorique caractéristique de ce défaut et une déviation maximale déterminée autour de cette fréquence théorique ;
   - un premier module de calcul (1D), configuré pour calculer, en fonction d'une fréquence cyclique, une cohérence cyclique dite intégrée du signal vibratoire traité moyennée sur une bande de fréquences spectrales prédéterminée ;
   - un module d'estimation (1E), configuré pour estimer une fréquence réelle du défaut à partir de la cohérence cyclique intégrée, de la fréquence théorique caractéristique du défaut et de la déviation maximale déterminée autour de cette fréquence théorique ;
   - un deuxième module de calcul (1F) d'un indicateur de diagnostic du défaut, configuré pour calculer ledit indicateur en sommant un nombre entier M de cohérences cycliques intégrées du signal vibratoire évaluées en M fréquences cycliques égales respectivement à M harmoniques de la fréquence réelle estimée du défaut ;
   - un module de comparaison (1G), configuré pour comparer l'indicateur de diagnostic du défaut avec un seuil prédéterminé pour ce défaut et pour détecter le défaut sur le roulement en cas de dépassement du seuil par l'indicateur de diagnostic.

14. Dispositif de surveillance selon la revendication 13 dans lequel le roulement (2) est un roulement à billes ou à rouleaux et le dispositif tournant est embarqué dans un aéronef.

15. Moteur d'aéronef (4) comprenant au moins un roulement (2) équipant un dispositif tournant (3) du moteur d'aéronef, au moins un capteur accéléromètrique (5) apte à acquérir un signal vibratoire comprenant une signature vibratoire dudit roulement, et un dispositif de surveillance (1) du roulement selon la revendication 13 ou 14.

**Patentansprüche**

1. Verfahren zur Überwachung eines Lagers (2), das eine Drehvorrichtung (3) ausstattet, umfassend:

   - einen Schritt des Erhaltens (E10) eines von einem Beschleunigungsmessfühler erfassten Vibrationssignals, wobei das Vibrationssignal eine Vibrationssignatur des Lagers umfasst;
   - einen Verarbeitungsschritt (E20) des Vibrationssignals, der das Entfernen einer deterministischen Komponente des Vibrationssignals umfasst;
   - einen Schritt des Erhaltens (E30), für einen bestimmten Fehler, der das Lager beeinträchtigen könnte, einer für diesen Fehler charakteristischen theoretischen Frequenz und einer um diese theoretische Frequenz bestimmten maximalen Ablenkung;

- einen Berechnungsschritt (E40-E50), in Abhängigkeit von einer zyklischen Frequenz, einer integrierten zyklischen Kohärenz des verarbeiteten Vibrationssignals, gemittelt auf einem vorher festgelegten Spektralfrequenzband;
- einen Schätzungsschritt (E60) einer realen Frequenz des Fehlers auf der Basis der integrierten zyklischen Kohärenz, der für den Fehler charakteristischen theoretischen Frequenz und der um diese theoretische Frequenz bestimmten maximalen Ablenkung;
- einen Berechnungsschritt (E70) eines Diagnoseindikators des Fehlers durch Summieren einer Ganzzahl M integrierter zyklischer Kohärenzen des Vibrationssignals, geschätzt in M zyklischen Frequenzen, die jeweils gleich M Oberwellen der geschätzten realen Frequenz des Fehlers sind;
- einen Schritt des Vergleichens (E80-E90) des Diagnoseindikators des Fehlers mit einem für diesen Fehler vorher festgelegten Grenzwert; und
- bei Überschreiten des Grenzwerts durch den Diagnoseindikator, einen Detektionsschritt (E100) des Fehlers auf dem Lager.

2. Überwachungsverfahren nach Anspruch 1, wobei der Verarbeitungsschritt einen Schritt des Spektralbleichens des Vibrationssignals umfasst.

3. Überwachungsverfahren nach Anspruch 1 oder 2 wobei der Berechnungsschritt der integrierten zyklischen Kohärenz umfasst:

- das Schätzen (E40), für eine gegebene zyklische Frequenz, der zyklischen Korrelation des verarbeiteten Vibrationssignal in Abhängigkeit von einer Spektralfrequenz;
- das Berechnen (E40), auf der Basis der geschätzten zyklischen Korrelation, der zyklischen Kohärenz des verarbeiteten Vibrationssignals für die gegebene zyklische Frequenz in Abhängigkeit von der Spektralfrequenz; und
- das Mitteln (E50), auf dem vorher festgelegten Spektralfrequenzband, der Amplitude zum Quadrat der zyklischen Kohärenz des verarbeiteten Vibrationssignals, die für die gegebene zyklische Frequenz berechnet wurde, wobei das Ergebnis des Mittels die integrierte zyklische Kohärenz für die gegebene zyklische Frequenz liefert.

4. Überwachungsverfahren nach Anspruch 3, wobei die zyklische Korrelation des verarbeiteten Vibrationssignals mittels eines Welch-Schätzers geschätzt wird.

5. Überwachungsverfahren nach einem der Ansprüche 1 bis 4, wobei der Schätzschritt (E60) der realen Frequenz des Fehlers die Berechnung der integrierten zyklischen Kohärenz für eine Vielzahl zyklischer Frequenzen umfasst, die in einem Intervall liegen, das zwischen der für den Fehler charakteristischen theoretischen Frequenz abzüglich der für diese theoretische Frequenz festgelegten maximalen Ablenkung und der für den Fehler charakteristischen theoretischen Frequenz plus der für diese theoretische Frequenz festgelegten maximalen Ablenkung liegt, wobei die reale Frequenz des Fehlers der zyklischen Frequenz von der Vielzahl zyklischer Frequenzen entspricht, für die die berechnete integrierte zyklische Kohärenz maximal ist.

6. Überwachungsverfahren nach Anspruch 5, wobei zwei aufeinanderfolgende zyklische Frequenzen der Vielzahl zyklischer Frequenz, bezeichnet jeweils $\alpha$ und $\alpha + \Delta\alpha$, derart ausgewählt sind, dass das Verhältnis $\alpha/d\alpha$ eine Ganzzahl ist.

7. Überwachungsverfahren nach einem der Ansprüche 1 bis 6, wobei die Ganzzahl M zwischen 6 und 10 liegt.

8. Überwachungsverfahren nach einem der Ansprüche 1 bis 7, umfassend ferner einen Mitteilungsschritt des Fehlers, der mindestens eine der Informationen umfasst von:

- einer Identifizierung des defekten Lagers;
- einer Angabe eines defekten Elements auf dem Lager; und/oder
- einer Angabe einer Schwere des auf dem Lager ermittelten Fehlers.

9. Überwachungsverfahren nach einem der Ansprüche 1 bis 8, wobei das Vibrationssignal bei einem stationären Regime der Drehvorrichtung von dem Beschleunigungsmessfühler erfasst wird.

10. Überwachungsverfahren nach einem der Ansprüche 1 bis 9, wobei die zyklische Frequenz in Bezug auf die Rotationsfrequenz des Lagers standardisiert ist.

**11.** Rechnerprogramm (PROG), das Befehle für die Ausführung der Schritte des Überwachungsverfahrens nach einem der Ansprüche 1 bis 10 aufweist, wenn das Programm von einem Rechner ausgeführt wird.

**12.** Rechnerlesbares Speichermedium, auf dem ein Rechnerprogramm nach Anspruch 11 gespeichert ist.

**13.** Vorrichtung zur Überwachung (1) eines Lagers (2), das eine Drehvorrichtung (3) ausstattet, wobei die Überwachungsvorrichtung umfasst:

- ein erstes Modul zum Erhalten (1A), das ausgelegt ist, um ein von einem Beschleunigungsmessfühler erfasstes Vibrationssignal zu erhalten, wobei das Vibrationssignal eine Vibrationssignatur des Lagers umfasst;
- ein Verarbeitungsmodul (1B) des Vibrationssignals, das ausgelegt ist, um eine deterministische Komponente des Vibrationssignals zu entfernen;
- ein zweites Modul zum Erhalten (1C), das ausgelegt ist, um einen bestimmten Fehler, der das Lager beeinträchtigen könnte, eine für diesen Fehler charakteristische theoretische Frequenz und eine um diese theoretische Frequenz bestimmte maximale Ablenkung zu erhalten;
- ein erstes Berechnungsmodul (1D), das ausgelegt ist, um in Abhängigkeit von einer zyklischen Frequenz eine integrierte zyklische Kohärenz des verarbeiteten Vibrationssignals, gemittelt auf einem vorher festgelegten Spektralfrequenzband, zu berechnen;
- ein Schätzmodul (1E), das ausgelegt ist, um eine reale Frequenz des Fehlers auf der Basis der integrierten zyklischen Kohärenz, der für den Fehler charakteristischen theoretischen Frequenz und der um diese theoretische Frequenz bestimmten maximalen Ablenkung zu schätzen;
- ein zweites Berechnungsmodul (1F) eines Diagnoseindikators des Fehlers, das ausgelegt ist, um den Indikator durch Summieren einer Ganzzahl M integrierter zyklischer Kohärenzen des Vibrationssignals, geschätzt in M zyklischen Frequenzen, die jeweils gleich M Oberwellen der geschätzten realen Frequenz des Fehlers sind, zu berechnen;
- ein Vergleichsmodul (1G), das ausgelegt ist, um den Diagnoseindikator des Fehlers mit einem vorher für diesen Fehler festgelegten Grenzwert zu vergleichen und um den Fehler auf dem Lager bei Überschreitung des Grenzwerts durch den Diagnoseindikator zu ermitteln.

**14.** Überwachungsvorrichtung nach Anspruch 13, wobei das Lager (2) ein Kugel- oder Rollenlager ist und die Drehvorrichtung in ein Fluggerät eingebaut ist.

**15.** Motor eines Fluggeräts (4), umfassend mindestens ein Lager (2), das eine Drehvorrichtung (3) des Fluggerätemotors ausrüstet, mindestens einen Beschleunigungsmessfühler (5), der imstande ist, ein Vibrationssignal zu erfassen, das eine Vibrationssignatur des Lagers umfasst, und eine Überwachungsvorrichtung (1) des Lagers nach Anspruch 13 oder 14.

**Claims**

**1.** A method for monitoring a bearing (2) equipping a rotary device (3), comprising:

- a step (E10) of obtaining a vibration signal acquired by an accelerometer sensor, said vibration signal containing a vibrational signature of the bearing;
- a step (E20) of processing the vibration signal comprising the elimination of a deterministic component of the vibration signal;
- a step (E30) of obtaining, for a determined defect liable to affect the bearing, a characteristic theoretical frequency of this defect and a determined maximum deviation around this theoretical frequency;
- a step (E40-E50) of computing, as a function of a cyclic frequency, a so-called integrated cyclic coherence of the processed vibration signal averaged over a predetermined band of spectral frequencies;
- a step (E60) of estimating a so-called actual frequency of the defect on the basis of the integrated cyclic coherence, of the characteristic theoretical frequency of the defect and of the determined maximum deviation around this theoretical frequency;
- a step (E70) of computing a diagnostic indicator of the defect by summing an integer number M of integrated cyclic coherences of the vibration signal evaluated as M cyclic frequencies respectively equal to M harmonics of the estimated actual frequency of the defect;
- a step (E80-E90) of comparing the diagnostic indicator of the defect with a predetermined threshold for this defect; and

- in the event of the threshold being exceeded by the diagnostic indicator, a step (E100) of detecting the defect on the bearing.

2. The monitoring method as claimed in claim 1 wherein the step of processing comprises a step of spectral whitening of the vibration signal.

3. The monitoring method as claimed in claim 1 or 2 wherein the step of computing the integrated cyclic coherence comprises:

    - estimating (E40), for a given cyclic frequency, the cyclic correlation of the processed vibration signal as a function of a spectral frequency;
    - computing (E40), on the basis of the estimated cyclic correlation, the cyclic coherence of the processed vibration signal for said given cyclic frequency as a function of the spectral frequency; and
    - averaging (E50), over said predetermined band of spectral frequencies, the square of the amplitude of the cyclic coherence of the processed vibration signal computed for said given cyclic frequency, the result of said average supplying the integrated cyclic coherence for said given cyclic frequency.

4. The monitoring method as claimed in claim 3 wherein the cyclic correlation of the processed vibration signal is estimated by means of a Welch estimator.

5. The monitoring method as claimed in any one of claims 1 to 4 wherein the step (E60) of estimating the actual frequency of the defect comprises the computing of the integrated cyclic coherence for a plurality of cyclic frequencies contained in an interval defined between the characteristic theoretical frequency of the defect minus the maximum deviation defined for this theoretical frequency and the characteristic theoretical frequency of the defect plus the maximum deviation defined for this theoretical frequency, the actual frequency of the defect corresponding to the cyclic frequency among said plurality of cyclic frequencies for which the integrated cyclic coherence is at a maximum.

6. The monitoring method as claimed in claim 5 wherein two consecutive cyclic frequencies of said plurality of cyclic frequencies, respectively denoted $\alpha$ and $\alpha + \Delta\alpha$, are chosen such that the ratio $\alpha/d\alpha$ is an integer number.

7. The monitoring method as claimed in any one of claims 1 to 6 wherein the integer number M is contained between 6 and 10.

8. The monitoring method as claimed in any one of claims 1 to 7 further comprising a step of giving notification of said defect comprising at least one item of information from among:

    - an identification of the defective bearing;
    - an indication of a defective element on said bearing; and/or
    - an indication of a severity of the defect detected on the bearing.

9. The monitoring method as claimed in any one of claims 1 to 8 wherein the vibration signal has been acquired by the accelerometer sensor in a stationary rating of the rotary device.

10. The monitoring method as claimed in any one of claims 1 to 9 wherein the cyclic frequency is normalized with respect to the rotation frequency of the bearing.

11. A computer program (PROG) including instructions for executing the steps of the monitoring method as claimed in any one of claims 1 to 10 when said program is executed by a computer.

12. An information medium readable by a computer on which is stored a computer program as claimed in claim 11.

13. A device (1) for monitoring a bearing (2) equipping a rotary device (3), said monitoring device comprising:

    - a first obtaining module (1A), configured to obtain a vibration signal acquired by an accelerometer sensor, said vibration signal comprising a vibrational signature of the bearing;
    - a module (1B) for processing the vibration signal, configured to eliminate a deterministic component of the vibration signal;
    - a second obtaining module (1C), configured to obtain for a determined defect liable to affect the bearing, a characteristic theoretical frequency of this defect and a determined maximum deviation around this theoretical frequency;

- a first computing module (1D), configured to compute, as a function of a cyclic frequency, a so-called integrated cyclic coherence of the processed vibration signal averaged over a predetermined band of spectral frequencies;

- an estimating module (1E), configured to estimate an actual frequency of the defect on the basis of the integrated cyclic coherence, of the characteristic theoretical frequency of the defect and of the determined maximum deviation around this theoretical frequency;

- a second module (1F) for computing a diagnostic indicator of the defect, configured to compute said indicator by summing an integer number M of integrated cyclic coherences of the vibration signal evaluated as M cyclic frequencies respectively equal to M harmonics of the estimated actual frequency of the defect;

- a comparing module (1G), configured to compare the diagnostic indicator of the defect with a predetermined threshold for this defect and to detect the defect on the bearing in the event of the threshold being exceeded by the diagnostic indicator.

14. The monitoring device as claimed in claim 13 wherein the bearing (2) is a ball bearing or a roller bearing and the rotary device is installed in an aircraft.

15. An aircraft engine (4) comprising at least one bearing (2) equipping a rotary device (3) of the aircraft engine, at least one accelerometer sensor (5) able to acquire a vibration signal comprising a vibrational signature of said bearing, and a device (1) for monitoring the bearing as claimed in claim 13 or 14.

FIG.1

FIG.2

Obtention d'un signal vibratoire Xb(n), n=1,...,L acquis par l'accéléromètre 5 lors d'un régime stationnaire du compresseur   E10

Elimination de la composante déterministe du signal vibratoire Xb(n), n=1,...,L => X(n), n=1,...,L   E20

Obtention de la fréquence théorique $\beta_d^{th}$ du défaut d et de la déviation maximale $\delta\beta_d$ à partir des caractéristiques géométriques du roulement 2 et de sa cinématique   E30

Calcul de la cohérence cyclique du signal vibratoire X(n), n=1,...,L au moyen d'un estimateur de Welch   E40

Calcul de la cohérence cyclique intégrée   E50

Estimation de la fréquence réelle $\beta_d^{act}$ du défaut d à partir de la cohérence cyclique intégrée   E60

Calcul de l'indicateur de diagnostic du défaut d   E70

Comparaison de l'indicateur de diagnostic du défaut d avec le seuil THR(d)   E80

E90

non    Dépassement du seuil THR(d) ?

oui

Détection du défaut d dans le roulement surveillé   E100

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2693176 A

**Littérature non-brevet citée dans la description**

- **P. BORGHESANI et al.** Application of cepstrum pre-whitening for the diagnosis of bearing faults under variable speed conditions. *MECHANICAL SYSTEMS AND SIGNAL PROCESSING,* 01 Avril 2013, vol. 36 (2), 370-384

- **N. SAWALHI et al.** Signal pre-whitening using cepstrum editing (liftering) to enhance fault detection in rolling element bearings. *Proceedings of the 24th International Congress on Condition Monitoring and Diagnostics Engineering Management (COMADEM),* 2011